# EUROPÄISCHE PATENTANMELDUNG

(11) **EP 3 219 649 A1**
(43) Veröffentlichungstag der Anmeldung: **20.09.2017**
(21) Anmeldenummer: 17152964.7
(22) Anmeldetag: 25.01.2017
(51) Int. Cl.: B65G 47/30

(54) **TRANSPORTVORRICHTUNG FÜR SCHALEN**

(30) Priorität: 15.03.2016 DE 102016204193
(71) Anmelder: MULTIVAC Sepp Haggenmüller SE & Co. KG, 87787 Wolfertschwenden (DE)
(72) Erfinder: ICKERT, Lars, 87437 Kempten (DE)
(74) Vertreter: Grünecker Patent- und Rechtsanwälte PartG mbB

(57) **Zusammenfassung**

Die Erfindung bezieht sich auf eine Transportvorrichtung (2) zum Transportieren von Schalen (3), umfassend ein erstes Transportband (6) und ein auf das erste Transportband (6) folgendes zweites Transportband (7), wobei die Transportbänder (6, 7) einspurig oder mehrspurig ausgeführt sind. Sie zeichnet sich dadurch aus, dass das zweite Transportband (7) ein Mittel (8) zum Bremsen und/oder Beschleunigen einer oder mehrerer Schalen (3) aufweist, wobei das Mittel (8) wenigstens einen Träger (12) mit wenigstens einem Beschleunigungsfinger (13) umfasst.

## Beschreibung

Die Erfindung bezieht sich auf eine Transportvorrichtung für Schalen gemäß dem Anspruch 1, sowie auf ein Verfahren mit den Merkmalen des Anspruchs 13.

Aus der EP 1574431 A1 ist eine Zuführeinheit einer Schalenverschließmaschine bekannt. Die Zuführeinheit umfasst einen zweispurigen Zuführförderer und einen zweispurigen Stauförderer, um willkürlich auf dem Zuführförderer ankommende Schalen in Verbindung mit dem Stauförderer als Gruppe mit vorgegebenen Abständen zueinander einem Greifersystem der Schalenverschließmaschine zum Erzeugen einer luftdichten Verpackung zuzuführen. Bei hoher Leistung und einer Beeinflussung der Reibkraft bzw. Haftung der Schalen auf dem Stauförderer beispielsweise durch Verschmutzung durch flüssige Produktreste kommt das System an seine Grenzen. Dabei kann es zu vergrößerten Lageabweichungen der Schalen zueinander und der Gruppe kommen.

Aufgabe der Erfindung ist es, eine alternative Zuführeinheit mit einer verbesserten Gruppenbildung von Schalen bereit zu stellen.

Diese Aufgabe wird gelöst durch eine Transportvorrichtung gemäß dem Oberbegriff das Anspruchs 1 bzw. durch ein Verfahren mit den Merkmalen des Anspruchs 13. Vorteilhafte Weiterbildungen der Erfindung sind in den Unteransprüchen angegeben.

Die erfindungsgemäße Transportvorrichtung zum Transportieren von Schalen umfasst ein erstes Transportband und ein auf das erste Transportband folgendes zweites Transportband, wobei die Transportbänder einspurig oder mehrspurig ausgeführt sind. Die erfindungsgemäße Transportvorrichtung, zeichnet sich dadurch aus, dass das zweite Transportband als Baugruppe ein Mittel zum Bremsen und/oder Beschleunigen einer oder mehrerer Schalen aufweist, wobei das Mittel wenigstens einen Träger mit wenigstens einem Beschleunigungsfinger umfasst. Dies ermöglicht bei einer einspurigen Transportvorrichtung ein Beeinflussen der Lage der Schale auf dem zweiten Transportband unabhängig von dessen Geschwindigkeit, um eine Gruppenbildung von aufeinander folgenden Schalen beispielsweise auf einem nachfolgenden Gruppierband zu verbessern oder um die Abstände zwischen aufeinanderfolgenden Schalen innerhalb der Gruppe mit geringsten Abweichungen zum vorgegebenen Abstand zu ermöglichen. Bei einer zwei- oder mehrspurigen Ausführung können unterschiedlich ankommende Schalen auf dem zweiten Transportband mittels der Beschleunigungsfinger zueinander parallelisiert werden, das heißt, dass die Position der Vorderkanten oder Vorderwände von nebeneinander bewegten Schalen angeglichen werden und somit eine synchrone und parallele Übergabe vom zweiten Transportband auf ein Gruppierband erfolgen kann. Dabei können das erste und zweite Transportband während eines Normalbetriebs mit einer jeweils konstanten Geschwindigkeit betrieben werden.

Vorzugsweise ist das erste Transportband als flächiger Bandriemen, Kettenzuführung, Mehrriemenband oder als Gliederkettenband ausgeführt, um auf konstruktiv einfache Weise mit lediglich einem einzigen Antrieb mehrspurig Schalen zu transportieren.

Das zweite Transportband weist bevorzugt mehrere Riemen auf, um die Beschleunigungsfinger gegenüber der Transportebene für die Schalen, die der Oberseite bzw. Transportebene der Riemen entspricht, von unten hochkommen und nach unten abtauchen zu lassen.

Dabei sind die Geschwindigkeit des ersten Transportbands und die Geschwindigkeit des zweiten Transportbands zueinander unterschiedlich, vorzugsweise ist die Geschwindigkeit des zweiten Transportbands etwas höher als die Geschwindigkeit des ersten Transportbands, um auf dem ersten Transportband aneinanderliegende und sich berührende Schalen beim Übergang auf das zweite Transportband zu beabstanden bzw. zu vereinzeln.

In einer besonders vorteilhaften Ausführung sind sowohl das erste Transportband als auch das zweite Transportband zweispurig ausgeführt, um die Schalen einem Gruppierband einer zweispurigen Schalenverschließmaschine mit sehr hoher Leistung bei einer exakten Gruppenbildung zuführen zu können.

Bevorzugt ist das Mittel unterhalb einer Transportebene der Schalen angeordnet.

Vorzugsweise weist jeder Träger wenigstens zwei, insbesondere drei Beschleunigungsfinger auf, die gleichmäßig bzw. symmetrisch außen am Umfang des Trägers angeordnet sind, so dass der Träger eine Stellung einnehmen kann, bei der sich kein Beschleunigungsfinger im Kollisionsbereich der Schale befindet. Beispielsweise können sich alle Beschleunigungsfinger unterhalb der Transportebene befinden und eine Schale darüber hinwegtransportiert werden.

Bevorzugt sind die Träger rotativ, zweifach linear oder mittels eines Riementriebs bewegbar (positionierbar), um die Beschleunigungsfinger entsprechend mit der Schale in Kontakt bringen zu können.

Vorzugsweise umfasst das Mittel einen Servoantrieb, um hohe Geschwindigkeiten und Beschleunigungen zu ermöglichen.

In einer bevorzugten Ausführung ist ein Sensor pro Spur vorgesehen, der mit einer Steuerung für das Mittel verbunden ist und der stromaufwärts des Mittels vorzugsweis am Ende des ersten Transportbands vorgesehen ist.

Ein erfindungsgemäßes Verfahren zum Betreiben einer Transportvorrichtung zum Transportieren von Schalen, das ein erstes Transportband und ein auf das erste Transportband folgendes zweites Transportband umfasst, wobei die Transportbänder einspurig oder mehrspurig ausgeführt sind, zeichnet sich dadurch aus, dass ein Mittel eine oder mehrere Schalen bremst und/oder beschleunigt, während sich die Schalen auf dem zweiten Transportband befinden.

Dabei werden die Schalen bevorzugt von einem oder mehreren Beschleunigungsfinger n des Mittels durch Formschluss gebremst und/oder beschleunigt.

In einer besonders vorteilhaften Ausführung werden zwei in Produktionsrichtung seitlich benachbarte Schalen derart gebremst und/oder beschleunigt, wobei diese zwei Schalen parallel zueinander laufend an ein auf das zweite Transportband nachfolgendes Gruppierband einer Schalenverschließmaschine übergeben werden.

Im Folgenden wird die Erfindung anhand von Ausführungsformen mit den beigefügten Zeichnungen erläutert. Dabei zeigen:
- Figur 1:: eine Schalenverschließmaschine mit einer Transportvorrichtung;
- Figur 2:: einen Ausschnitt der Transportvorrichtung in einer ersten Phase;
- Figur 3:: einen Ausschnitt der Transportvorrichtung in einer zweiten Phase;
- Figur 4:: einen Ausschnitt der Transportvorrichtung in einer dritten Phase;
- Figur 5:: einen Ausschnitt der Transportvorrichtung in einer vierten Phase;
- Figur 6:: einen Träger in einer ersten Ausführung;
- Figur 7:: einen Träger in einer zweiten Ausführung und
- Figur 8:: einen Träger in einer dritten Ausführung.

Gleiche Komponenten sind in den Figuren durchgängig mit gleichen Bezugszeichen versehen worden.

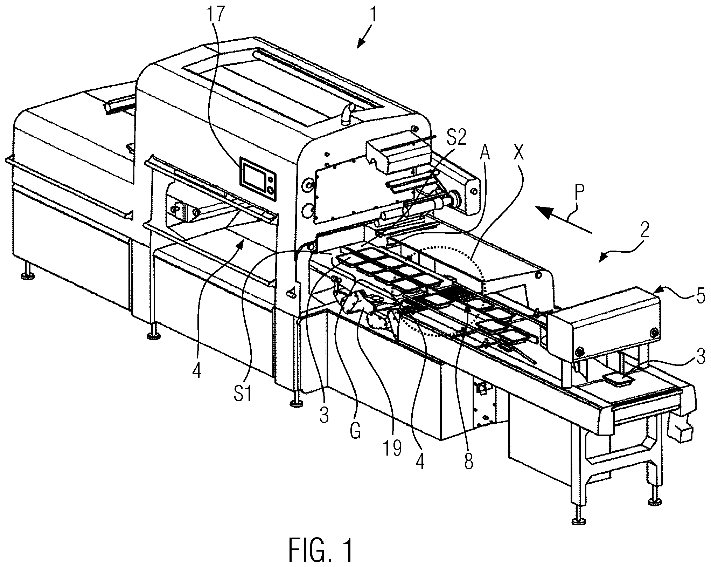

Fig. 1 zeigt eine Schalenverschließmaschine 1 zum taktweisen Versiegeln von zwei mal vier Schalen 3 mit einer nicht näher dargestellten Deckelfolie und eine Transportvorrichtung 2. Dabei werden die Schalen 3 zweispurig und gruppenweise mit je vier Schalen 3 entlang einer ersten S1 und einer zweiten Spur S2 auf einem Gruppierband 4 einer Siegelvorrichtung 5 der Schalenverschließmaschine 1 zugeführt. Die zwei Gruppen G befinden sich derart auf dem Gruppierband 4, dass innerhalb einer Gruppe G in einer Produktionsrichtung P aufeinanderfolgende Schalen 3 einen vorgegebenen Abstand A aufweisen, um von einem nicht näher dargestellten Greifersystem erfasst werden zu können und in die Siegelstation 5 transportierbar zu sein.

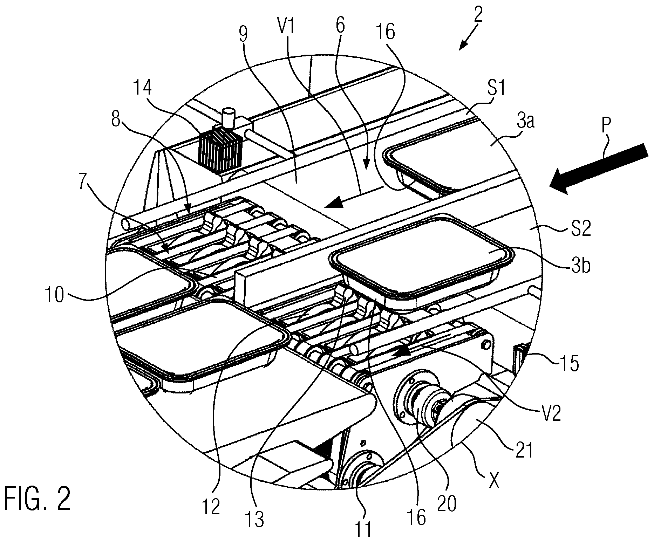

Die Schalen 3 werden in dieser Darstellung einspurig von einer nicht näher dargestellten Produktionseinheit einspurig an die Transportvorrichtung 2 übergeben und über eine Verteileinrichtung 5 abwechselnd auf die zwei Spuren S1 und S2 eines ersten Transportbands 6 verteilt, siehe Figur 2. Die Schalen 3 werden von dem ersten Transportband 6 an ein zweites Transportband 7 der Transportvorrichtung 2 übergeben. Das zweite Transportband 7 umfasst ein Mittel 8 zum formschlüssigen Bremsen und/oder Beschleunigen der Schalen 3, um die rechte Schale 3a auf der in Produktionsrichtung P rechten Spur S1 und die linke Schale 3b auf der linken Spur S2 gleichgerichtet bezogen auf ihre Vorderseiten auszurichten und an das Gruppierband 4 zu übergeben. Dieser Vorgang wird im Folgenden als "Parallelisierung" bezeichnet. In den Figuren 2 bis 5 wird der Ablauf beim Parallelisieren näher anhand einer Ausschnittsvergrößerung X der Fig. 1 beschrieben.

Fig. 2 zeigt einen Ausschnitt X der Transportvorrichtung 2 mit dem ersten Transportband 6, auf dem eine rechte Schale 3a auf der rechten Spur S1 und eine linke Schale 3b auf der linken Spur S2 in Produktionsrichtung P dem zweiten Transportband 7 zugeführt werden. Dabei ist die rechte Schale 3a etwas zurückgesetzt gegenüber der linken Schale 3b. Das erste Transportband 6 weist Bandriemen 9 je Spuren S1, S2 auf. Die Bandriemen 9 werden gemeinsam und damit synchron über einen nicht näher dargestellten elektromotorischen Antrieb angetrieben, vorzugsweise mit einer konstanten Geschwindigkeit V1.

Das zweite Transportband 7 weist je Spur S1, S2 fünf Riemen 10 auf, die gemeinsam und synchron über einen Antrieb 11 angetrieben werden. Der Antrieb 11 umfasst einen Elektromotor, vorzugsweise einen Servomotor, um die Riemen 10 mit einer konstanten Geschwindigkeit V2 anzutreiben. Dabei ist vorzugsweise die Geschwindigkeit V2 des zweiten Transportbands 7 höher als die Geschwindigkeit V1 des ersten Transportbands 6, um aneinanderliegende Schalen 3 auf einer gemeinsamen Spur S1, S2 beim Übergang vom ersten Transportband 6 auf das zweite Transportband 7 zu beabstanden.

Das zweite Transportband 7 umfasst das Mittel 8 zum Bremsen und Beschleunigen der Schalen 3a und 3b. Das Mittel 8 umfasst in der gezeigten Ausführung vier Träger 12 je Spur S1, S2. Jeder einzelne Träger 12 weist drei Beschleunigungsfinger 13 auf, die gleichmäßig in einer Aufteilung von 3 x 120° am Umfang entlang angeordnet sind. Die Träger 12 sind jeweils zwischen zwei benachbarten parallel laufenden Riemen 10 angeordnet. Die Träger 12 sind auf einer gemeinsamen Welle 20 angeordnet und werden von einem Antrieb 21, vorzugsweise einem Servoantrieb, angetrieben.

Fig. 2 zeigt auch einen rechten Sensor 14 zur Erfassung von Schalen 3a auf der rechten Spur S1 und einen linken Sensor 15 zur Erfassung von Schalen 3b auf der linken Spur S2. Vorzugsweise wird die in Produktionsrichtung P vorlaufende Vorderwand 16 der Schale 3 von den Sensoren 14, 15 erfasst. Die Sensoren 14, 15 können als Lichtschranken ausgeführt sein.

In Fig. 2 ist eine erste Phase gezeigt, bei der die linke Schale 3b den linken Sensor 15, der im Übergangsbereich vom ersten Transportband 6 zum zweiten Transportband 7 angeordnet ist, passiert und eine Steuerung 17 der Schalenverschließmaschine 1, siehe Fig. 1, oder eine eigene Steuerung der Transportvorrichtung 2 steuert entsprechend dem Signal des linken Sensors 15 und der Geschwindigkeit V2 des zweiten Transportbands 7 die Träger 12 derart, dass die Beschleunigungsfinger 13 die linke Schale 3b an ihrer Vorderwand 16 aufnehmen bzw. in Kontakt kommen, indem sich die Geschwindigkeit V3 der Beschleunigungsfinger 13 in Produktionsrichtung P der Geschwindigkeit V2 der linken Schale 3b anpasst und anschließend die linke Schale 3b gebremst bzw. negativ beschleunigt wird, um die linke Schale 3b solange auf dem zweiten Transportband 7 zu halten, bis die rechte Schale 3a die Beschleunigungsfinger 13 auf der rechten Spur S1 erreicht. Dabei passiert die rechte Schale 3b den rechten Sensor 14.

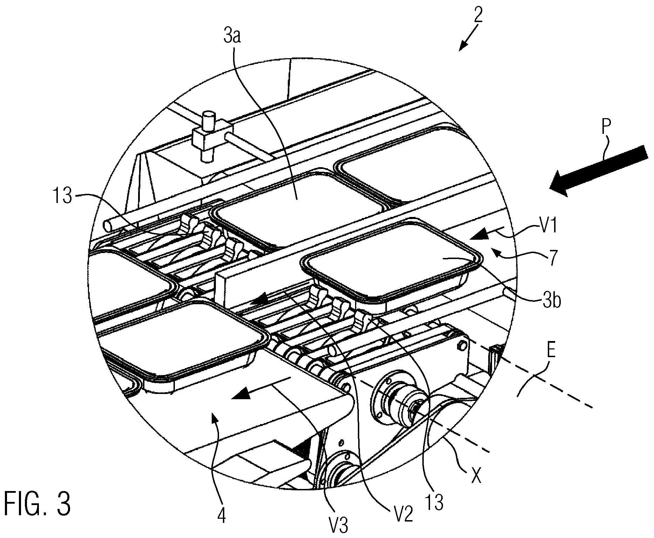

Fig. 3 zeigt eine zweite Phase, bei der beide Schalen 3a, 3b an den Beschleunigungsfinger 13 anliegen und sich damit zueinander in einer parallelisierten Lage befinden. Die Beschleunigungsfinger 13 werden beschleunigt bis auf die Geschwindigkeit V2 des zweiten Transportbands 7 und noch höher, um nach unten zwischen die Riemen 10 abzutauchen, d.h. unter eine Transportebene E abzutauchen, die durch die Oberseite der Riemen 10, die die Schalen 3 bewegen, definiert ist, bevor die Schalen 3a, 3b auf das nachfolgende Gruppierband 4 übergeben werden. Dabei kann die Geschwindigkeit V3 des Gruppierbands 4 mit der Geschwindigkeit V2 des zweiten Transportbands 7 synchronisiert werden. Auch das Gruppierband 4 umfasst einen elektromotorischen, vorzugsweise einen servomotorischen Antrieb 19 (siehe Fig. 1).

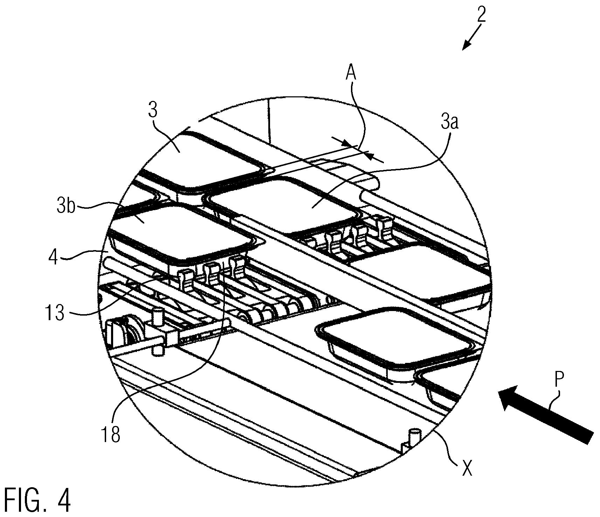

Fig. 4 zeigt die Transportvorrichtung 2 in einer dritten Phase, bei der sich die Schalen 3a, 3b bereits teilweise auf dem Gruppierband 4 befinden und die Beschleunigungsfinger 13 sich von hinten an eine Rückwand 18 der Schalen 3a, 3b annähern, um die Schalen 3a, 3b mit einer Geschwindigkeit anschieben, die vorzugsweise etwas höher ist, als die Geschwindigkeit V2 des zweiten Transportbands 7 oder die Geschwindigkeit V3 des Gruppierbands 4, unabhängig davon, ob die Geschwindigkeiten V2 und V3 synchronisiert sind oder auch nicht. Dieser dargestellte Schiebevorgang ist optional und dient ebenso einer Parallelisierung der Schalen 3a und 3b zueinander oder auch der Positionierung der Schalen 3a und 3b auf dem Gruppierband 4 gegenüber den vorlaufenden Schalen 3, um einen möglichst exakten vorgegebenen Abstand A zwischen aufeinanderfolgenden Schalen 3 zu erreichen.

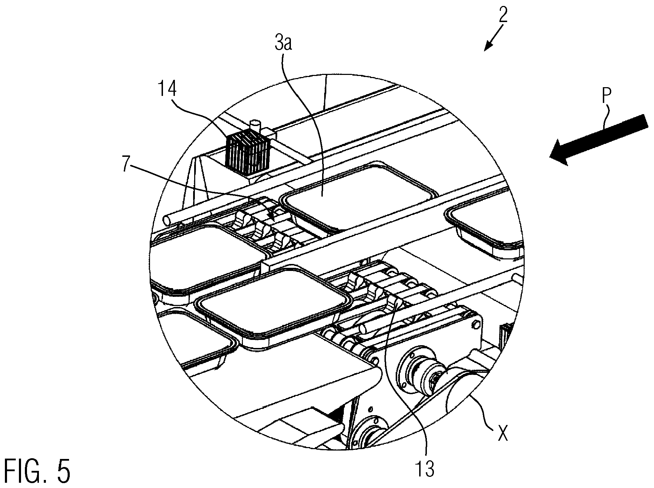

Fig. 5 zeigt die Transportvorrichtung 2 in einer vierten Phase, der sogenannten Wartephase, bei der die Beschleunigungsfinger 13 in Ruhe sind, bis die nächste Schale 3, hier eine rechte Schale 3a, von dem rechten Sensor 14 erkannt und auf das zweite Transportband 7 in Produktionsrichtung P übergeben wird.

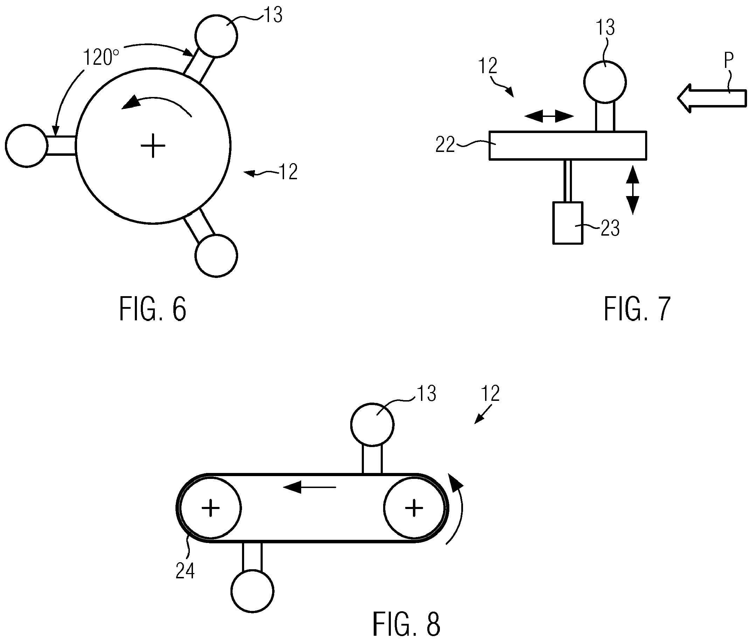

Fig. 6 zeigt den Träger 12 in einer ersten Ausführung als eine rotativ antreibbare Scheibe mit drei Beschleunigungsfinger n 13, die symmetrisch in 120° Abständen angeordnet sind.

Fig. 7 zeigt den Träger 12 einer zweiten Ausführung, wobei ein Beschleunigungsfinger mittels einer ersten horizontalen Lineareinheit 22 in einer Längsrichtung identisch mit der Produktionsrichtung P und zusätzlich vertikal mittels einer zweiten vertikalen Linearantriebseinheiten oder Hubeinheit 23 bewegbar ist.

In Fig. 8 ist der Träger 12 als Riementrieb 24 ausgeführt, auf dem zwei Beschleunigungsfinger 13 angeordnet sind.

Allen Ausführungen ist gemein, dass die Steuerung 17 dazu konfiguriert ist, die Geschwindigkeit und Beschleunigung des Beschleunigungsfingers 13 derart zu verändern, um sich sehr sanft der Schale 3 bzw. deren Vorderwand 16 oder deren Rückwand 18 anzunähern und den Parallelisierungsvorgang möglichst ohne einen Stillstand der Schale 3 selbst auszuführen bzw. hohe Beschleunigungen oder einen Ruck zu vermeiden, um beispielsweise ein Überschwappen von flüssigen Produkten über die Schale 3 hinaus zu verhindern und zugleich die Transportleistung zu erhöhen.

## Patentansprüche

1. Transportvorrichtung (2) zum Transportieren von Schalen (3), umfassend ein erstes Transportband (6) und ein auf das erste Transportband (6) folgendes zweites Transportband (7), wobei die Transportbänder (6, 7) einspurig oder mehrspurig ausgeführt sind, **dadurch gekennzeichnet, dass** das zweite Transportband (7) ein Mittel (8) zum Bremsen und/oder Beschleunigen einer oder mehrerer Schalen (3) aufweist, das wenigstens einen Träger (12) mit wenigstens einem Beschleunigungsfinger (13) umfasst.

2. Transportvorrichtung nach Anspruch 1, **dadurch gekennzeichnet, dass** das erste Transportband (6) als flächiger Bandriemen (9), Kettenzuführung, Mehrriemenband oder als Gliederkettenband ausgeführt ist.

3. Transportvorrichtung nach einem der vorangehenden Ansprüche, **dadurch gekennzeichnet, dass** das zweite Transportband (7) mehrere Riemen (10) aufweist.

4. Transportvorrichtung nach einem der vorangehenden Ansprüche, **dadurch gekennzeichnet, dass** die Geschwindigkeit (V1) des ersten Transportbands (6) und die Geschwindigkeit (V2) des zweiten Transportbands (7) unterschiedlich sind.

5. Transportvorrichtung nach einem der vorangehenden Ansprüche, **dadurch gekennzeichnet, dass** sowohl das erste Transportband (6) als auch das zweite Transportband (7) zweispurig ausgeführt sind.

6. Transportvorrichtung nach einem der vorangehenden Ansprüche, **dadurch gekennzeichnet, dass** das Mittel (8) unterhalb einer Transportebene (E) der Schalen (3) angeordnet ist.

7. Transportvorrichtung nach einem der vorangehenden Ansprüche, **dadurch gekennzeichnet, dass** das Mittel (8) mehrere parallel zueinander angeordnete Träger (12) aufweist.

8. Transportvorrichtung nach einem der vorangehenden Ansprüche, **dadurch gekennzeichnet, dass** jeder Träger (12) wenigstens zwei, insbesondere drei Beschleunigungsfinger (13) aufweist.

9. Transportvorrichtung nach einem der vorangehenden Ansprüche, **dadurch gekennzeichnet, dass** die Träger (12) rotativ, zweifach linear oder mittels eines Riementriebs (24) bewegbar sind.

10. Transportvorrichtung nach einem der vorangehenden Ansprüche, **dadurch gekennzeichnet, dass** das Mittel (8) einen Servoantrieb (21) umfasst.

11. Transportvorrichtung nach einem der vorangehenden Ansprüche, **dadurch gekennzeichnet, dass** ein Sensor (14, 15) pro Spur (S1, S2) vorgesehen ist, der mit einer Steuerung (17) für das Mittel (8) verbunden ist und der stromaufwärts des Mittels (8) vorzugsweis am Ende des ersten Transportbands (6) vorgesehen ist.

12. Kombination einer Transporteinrichtung (2) nach einem der vorangehenden Ansprüche und einer Schalenverschließmaschine (1).

13. Verfahren zum Betreiben einer Transportvorrichtung (2) zum Transportieren von Schalen (3), umfassend ein erstes Transportband (6) und ein auf das erste Transportband (6) folgendes zweites Transportband (7), wobei die Transportbänder (6, 7) einspurig oder mehrspurig ausgeführt sind, **dadurch gekennzeichnet, dass** ein Mittel (8) eine oder mehrere Schalen (3, 3a, 3b) bremst und/oder beschleunigt, während sich die Schalen (3, 3a, 3b) auf dem zweiten Transportband (7) befinden.

14. Verfahren nach Anspruch 13, **dadurch gekennzeichnet, dass** die Schalen (3, 3a, 3b) von einem oder mehreren Beschleunigungsfinger n (13) des Mittels (8) mittels Formschluss gebremst und/oder beschleunigt werden.

15. Verfahren nach Anspruch 14, **dadurch gekennzeichnet, dass** zwei in Produktionsrichtung (P) seitlich benachbarte Schalen (3a, 3b) derart gebremst und/oder beschleunigt werden, dass diese zwei Schalen (3a, 3b) parallel zueinander laufend an ein auf das zweite Transportband (7) nachfolgendes Gruppierband (4) einer Schalenverschließmaschine (1) übergeben werden.
